(19) Europäisches Patentamt / European Patent Office / Office européen des brevets

(11) **EP 2 298 706 A1**

(12) **EUROPEAN PATENT APPLICATION**
published in accordance with Art. 153(4) EPC

(43) Date of publication:
**23.03.2011 Bulletin 2011/12**

(21) Application number: **09754452.2**

(22) Date of filing: **28.05.2009**

(51) Int Cl.:
*C03B 23/025* (2006.01)    *G02B 3/00* (2006.01)
*G02C 7/00* (2006.01)

(86) International application number:
**PCT/JP2009/002361**

(87) International publication number:
**WO 2009/144943 (03.12.2009 Gazette 2009/49)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **30.05.2008 JP 2008142864**

(71) Applicant: **Hoya Corporation**
**Tokyo 161-8525 (JP)**

(72) Inventors:
- **TAGUCHI, Noriaki**
  **Tokyo 161-8525 (JP)**
- **SHIMIZU, Hidetaka**
  **Tokyo 161-8525 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **METHOD FOR MANUFACTURING LENS FORMING DIE**

(57) The present invention relates to a method of manufacturing a lens casting mold by introducing a forming mold, with a forming surface on which a glass material being formed is positioned, into a continuous heating furnace and conducting thermal treatment while conveying the forming mold in the furnace to form an upper surface of the glass material being formed into a shape of a molding surface for forming a lens optical surface. The method of manufacturing a lens casting mold of the present invention comprises rotating the forming mold to a right and/or to a left relative to a direction of conveyance of the forming mold in a region within the continuous heating furnace where a temperature of the upper surface of the glass material being formed is equal to or greater than a glass transition temperature of the glass.

[Fig. 6]

Forming mold conveyance direction

EP 2 298 706 A1

## Description

CROSS-REFERENCE TO RELATED APPLICATIONS

This application claims the benefit of priority to Japanese Patent Application No. 2008-142864 filed on May 30, 2008, which is expressly incorporated herein by reference in its entirety.

TECHNICAL FIELD

The present invention relates to a method of manufacturing a lens casting mold by hot sag forming method.

BACKGROUND OF THE ART

Methods of forming glass molds for eyeglass lenses include employing mechanical grinding and polishing methods, mechanical grinding methods, and electrical processing methods such as electrical discharge processing to produce a heat-resistant base mold, bringing this base mold into contact with a glass blank softened by heating to transfer the surface shape of the base mold, employing a grinding program for each surface shape to be obtained, and forming a base mold having a corresponding surface shape.

In recent years, the demand has increased for multifocal eyeglass lenses being made thinner and lighter by incorporation of axially symmetric, aspherical lens design. The hot sag molding method has been proposed (see Japanese Unexamined Patent Publication (KOKAI) Heisei Nos. 6-130333 and 4-275930, which are expressly incorporated herein by reference in their entirety) as a method for forming molds to produce eyeglass lenses having such complex shapes.

In the hot sag forming method, a glass material is placed on a mold, and softened by being heated to a temperature equal to or greater than its softening point, causing it to tightly contact with the mold. The shape of the mold is thus transferred to the upper surface of the glass material, yielding a formed article of desired surface shape. The glass material can be heated in a batch-type heating furnace or continuous heating furnace, but to achieve production efficiency, continuous heating furnaces are widely employed. As the object being heated is being conveyed within a continuous heating furnace, it is possible to continuously conduct a series of processes within the furnace in the form of a temperature-rising step, a high temperature-maintaining step, a temperature-lowering step and the like by controlling the temperature within the furnace so as to impart a prescribed temperature distribution in the conveyance direction. However, in a continuous heating furnace, the amount of change in various parts of the surface of the object being heated tends to be nonuniform due to the presence of the temperature distribution in the conveyance direction, as stated above. In the hot sag forming method employing a continuous heating furnace, there is a problem in that nonuniformity of the temperature distribution within the furnace makes it difficult to form a desired surface shape in conformity with designed values.

A more detailed description of the above point will be given. Eyeglass lenses include spherical lenses in which the lens surface is design to have a spherical shape, and aspherical lenses, which are designed to have aspherical surface shapes. By properly designing the surface shape of an aspherical lens, it is possible to achieve extremely low aberration, which is the difference between the focal point of light passing through the edge portion and the focal point of light passing through the center portion of the lens. Thus, the demand for aspherical lenses is increasing. However, minimizing aberration requires a complex surface design and achieving high precision in the complex surface shape during cast molding of the lens. However, since the hot sag forming method is a method of indirect forming in which the upper surface of the glass material does not come in contact with the mold, it is not easy to control the upper surface shape. In particular, to manufacture a precisely designed aspherical lens mold, such as one that reduces aberration in the molded lens, a forming mold having an aspherical surface shape is employed. However, it is extremely difficult to transfer such a complex shape with high precision to the upper surface of the glass material. In particular, when the temperature distribution on the surface of the glass material is not uniform during heat softening of the glass material, even the slightest temperature distribution may cause the shape of the finished mold to deviate from the designed shape. When such phenomenon occurs during the manufacturing of a mold for aspherical lenses, complex correction operations become necessary. In addition, when such phenomenon occurs during the manufacturing of a mold for lenses having rotational symmetry, such as monofocal lenses, the shift in temperature distribution ends up causing a mold with a shift in symmetry to be manufactured. A mold with good symmetry, even when it has a number of errors relative to designed values, can be easily corrected to impart a desired surface shape in accordance with designed values. However, a mold with shifted symmetry is extremely difficult to correct.

Disclosure of the invention

Accordingly, the object of the present invention is to provide a means for manufacturing a mold for lenses of desired surface shape by the hot sag forming method with high productivity.

The present inventors conducted extensive research into achieving the above object. As a result, they discovered that by rotating the forming mold in a region in a continuous heating furnace where the temperature of the upper surface of the glass material being formed was equal to or greater than the glass transition temperature of the glass, which was a region where the upper surface of a glass material being formed underwent substantial deformation, it was possible to inhibit deformation errors caused by nonuniformity in the temperature distribution and thereby form the upper surface of the glass material to a desired shape in conformity with designed values. The present invention was devised on that basis.

The present invention relates to a method of manufacturing a lens casting mold by introducing a forming mold, with a forming surface on which a glass material being formed is positioned, into a continuous heating furnace and conducting thermal treatment while conveying the forming mold in the furnace to form an upper surface of the glass material being formed into a shape of a molding surface for forming a lens optical surface, comprising rotating the forming mold to a right and/or to a left relative to a direction of conveyance of the forming mold in a region within the continuous heating furnace where a temperature of the upper surface of the glass material being formed is equal to or greater than a glass transition temperature of the glass.

According to the above manufacturing method, a casting mold for a lens having rotational symmetry can be manufactured.

According to the above manufacturing method, a casting mold for a monofocal aspherical lens can be manufactured.

The temperature of the continuous heating furnace may be controlled so as to sequentially dispose, from a forming mold introduction inlet side, a temperature rising region in which a temperature of the upper surface of the glass material being formed rises in the direction of conveyance of the forming mold, a high temperature-maintaining region where the temperature of the upper surface of the glass material being formed is maintained equal to or higher than a maximum temperature in the temperature rising region, and a cooling region where the temperature of the upper surface of the glass material being formed is lower than a maximum temperature in the high temperature-maintaining region, and the above rotating may be conducted in the high temperature-maintaining region.

The above rotating may comprise rotation to the right or left at a rotational angle of equal to or more than 180° relative to the direction of conveyance of the forming mold, and subsequent rotation at a rotational angle of equal to or more than 180° in a direction opposite to the rotation.

The present invention permits the manufacturing of molds for monofocal lenses with good symmetry and molds for aspherical lenses having complex surface shapes with good productivity.

BEST MODE FOR CARRYING OUT THE INVENTION

The present invention relates to a method of manufacturing a lens casting mold by introducing a forming mold, with a forming surface on which a glass material being formed is positioned, into a continuous heating furnace and conducting thermal treatment while conveying the forming mold in the furnace to form an upper surface of the glass material being formed into a shape of a molding surface for forming a lens optical surface. In the method of manufacturing a lens casting mold of the present invention, the forming mold is rotated to a right and/or to a left relative to a direction of conveyance of the forming mold in a region within the continuous heating furnace where a temperature of the upper surface of the glass material being formed is equal to or greater than a glass transition temperature of the glass.

The casting mold that is manufactured by the method of manufacturing a lens casting mold of the present invention can be employed as the upper or lower mold of a mold for manufacturing plastic lenses by the cast polymerization method. More specifically, an upper mold and a lower mold can be assembled by means of a gasket or the like into a mold such that the upper surface of a glass material being formed by the hot sag forming method is positioned within the mold, and a plastic lens starting material liquid can be cast into the cavity of the mold and caused to polymerize, yielding a plastic lens. Examples of lenses that are manufactured are various lenses such as monofocal lenses, multifocal lenses, axially symmetric aspherical dioptric power lenses, progressive dioptric power lenses, progressive dioptric power lenses both surfaces of which are aspherical, and other lenses having free curved surface shapes, axially symmetric aspherical lenses, and center-symmetric aspherical lenses.

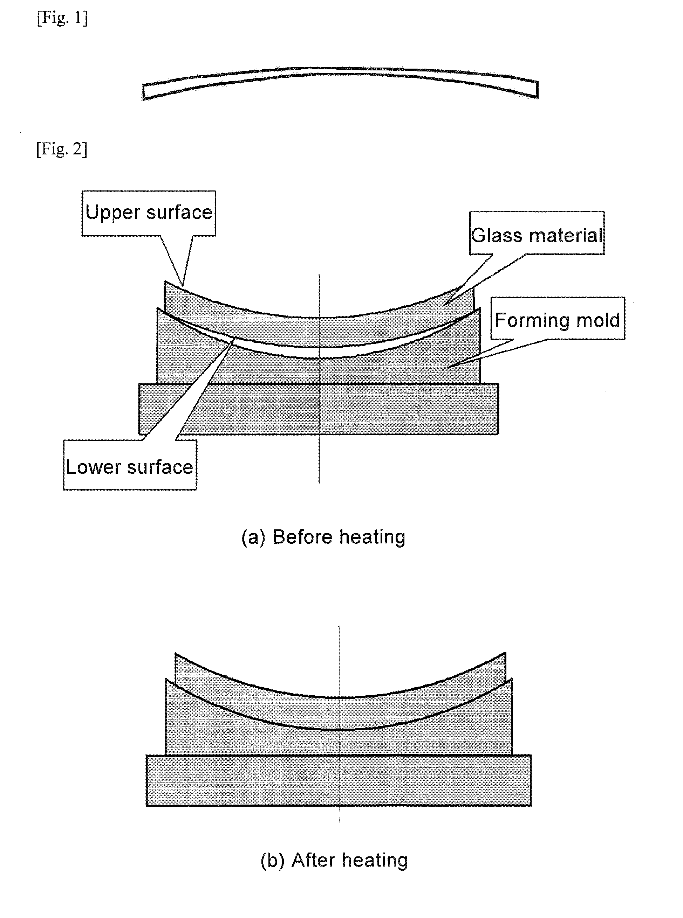

The phrase "free curved surface shape" refers to a surface shape comprised of a surface in which the curvature at the position for measurement of far portion on the optical surface differs from the curvature at other positions. Additionally, the term "spherical lens" refers to a lens in which the curvature at the position for measurement of far portion and the curvature at other positions on the optical surface of the lens are identical. The term "axially symmetric aspherical lens" refers to, for example, a lens in which the curvature at the position for measurement of far portion disposed in the geometric center differs from the curvature at other positions on the optical surface of the lens. Generally, an axially symmetric aspherical lens has a shape in which the position for measurement of far portion is disposed in the geometric center, with the curvature continuously increasing or decreasing with distance from the center of the lens along a principal meridian running from the center to the periphery of the lens. In addition, a center-symmetric aspherical lens has the cross-section shown in Fig. 1, for example. The method of manufacturing a mold for lenses of the present invention can be used as a method for manufacturing molds for molding various lenses described above. Since this method can be used to manufacture molds capable of molding lenses with good symmetry in which deformation errors due to nonuniformity of the temperature distribution in a continuous heating furnace is inhibited, it is suitable as a method for manufacturing molds for monofocal lenses in which a high degree of symmetry is required. Further, since the method of manufacturing a lens casting mold of the present invention can inhibit deformation errors due to nonuniformity in the temperature distribution in a continuous heating furnace and permit the high-precision transfer of complex shapes to the upper surface of the glass material, it is suitable as a method for manufacturing a mold for lenses having a complex surface shape, such as aspherical lenses. In particular, the method of manufacturing a lens casting mold of the present invention is desirable for use as a method for manufacturing a casting mold for lenses having surfaces molded into complex surface shapes with rotational symmetry, and is particularly desirable as a method for manufacturing monofocal aspherical lenses. For example, reference can be made to Japanese Unexamined Patent Publication (KOKAI) Nos. 2001-356304 and 2002-31785 for the surface design of monofocal aspherical lenses. The shape of the forming surface of a forming mold for manufacturing a lens casting mold can be determined based on the surface shape that is being designed. The contents of the above applications are expressly incorporated herein by reference in their entirety.

A lens casting mold is manufactured by the hot sag forming method in the method of manufacturing a lens casting mold of the present invention. Fig. 2 is a descriptive drawing of the hot sag forming method.

Normally, in the hot sag forming method, the glass material being formed is subjected to thermal treatment while positioned on the forming mold in a state where the center of the lower surface of the glass material is separated from the forming surface of the forming mold (Fig. 2(a)). Thus, the lower surface of the glass material being formed deforms under its own weight, coming into tight contact with the forming surface of the forming mold (Fig. 2(b)) and causing the shape of the forming surface of the forming mold to be transferred to the upper surface of the glass material. As a result, the upper surface of the glass material can be formed into a desired shape. However, when such forming is conducted in a continuous heating furnace having an internal temperature distribution, the ambient temperature differs with the position within the furnace, creating variation in the temperature at various positions within the surface of the glass material that is being formed and causing nonuniformity in the temperature distribution. This makes it difficult to manufacture a casting mold of desired surface shape, as described above. Accordingly, in the present invention, in a region where the temperature of the upper surface of the glass material being formed reaches or exceeds the glass transition temperature of the glass, the forming mold is rotated to the right and/or to the left relative to the direction of conveyance. This is a region within the continuous heating furnace in which deformation of the upper surface of the glass material being formed progresses substantially. In this region, when there are large differences in temperature at various positions within the surface of the glass material being formed, the shift in symmetry set forth above may occur and the surface shape that is formed may differ greatly from the designed values. By contrast, by rotating the forming mold to the right and/or to the left relative to the direction of conveyance in this region, it is possible to reduce the difference in temperature between various positions within the surface of the glass material being formed. Further, since the glass material being formed normally softens in this region and the lower surface of the glass material being formed comes into tight contact with the forming surface of the forming mold and thus there may be no risk of the glass material being formed shifting position on the forming mold during rotation, it can be rotated while remaining stably seated, making it possible to eliminate nonuniformity in the temperature distribution. In this manner, the present invention permits the manufacturing of a casting mold for lenses of desired surface shape in a large-quantity process employing a continuous heating furnace.

The method of manufacturing a lens casting mold of the present invention will be described in greater detail below.

[Glass material to be formed]

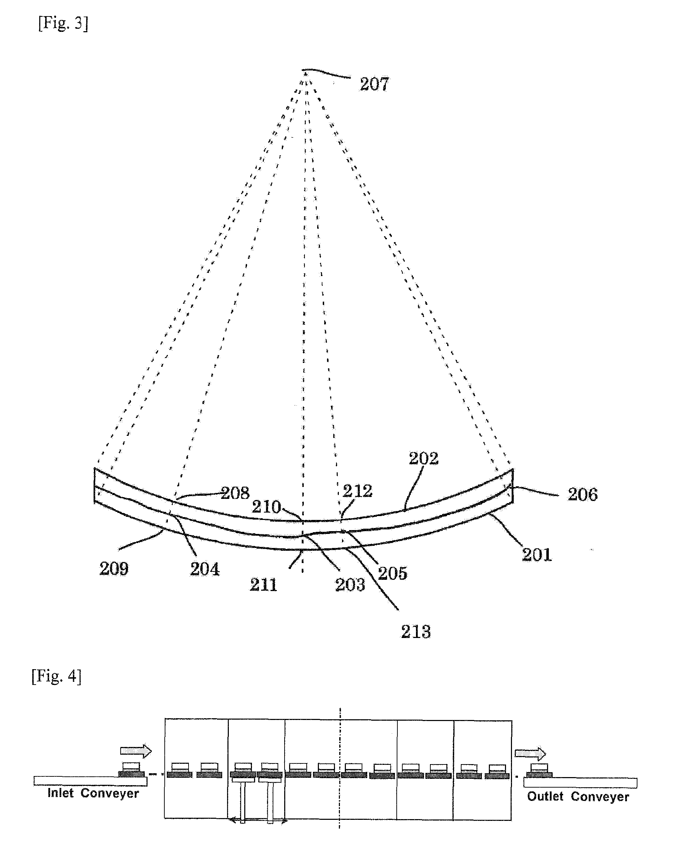

The shape of the glass material the upper surface of which is formed by being passed through a continuous heating furnace in the present invention is not specifically limited. The upper surface and the lower surface desirably have a planar surface or spherical surface shape. Since the glass material having the above shape can be readily processed and thus using a glass material with such shape is advantageous to increased productivity. The glass material upper and lower surfaces of which are spherical is desirably a glass material having convex and concave surfaces being spherical as well as being of equal or essentially equal thickness in the normal direction. In this context, the phrase "essentially equal thickness in the normal direction" means that at at least the geometric center of the glass material, the degree of change in thickness as measured in the normal direction is less than or equal to 1.0 percent, preferably less than or equal to 0.8 percent. Fig. 3 shows a schematic sectional view of such glass material.

In Fig. 3, glass material 206 has a meniscus shape with concave and convex surfaces, the external shape being round. The surface shapes of the concave surface 202 and the convex surface 201 of the glass material are both spherical.

The term "normal direction" of the two surfaces of the glass material means the direction that is perpendicular to the glass material surface at any position on the surface. Accordingly, the normal direction changes at each position on the surface. For example, direction 204 in Fig. 3 denotes the normal direction at point 208 on the concave surface of the glass material. The points of intersection of normal direction 204 with the concave and convex surfaces are 208 and 209, respectively. Thus, the interval between 208 and 209 is the thickness in the normal direction. There are other positions on the concave glass surface, such as 210 and 212, the normal directions of which are 203 and 205, respectively. In normal direction 203, the interval between 210 and 211, and in normal direction 205, the interval between 212 and 213, is the thickness in the normal direction. In a glass material of equal thickness in the normal direction, this spacing between the upper and lower surfaces in the normal direction is a constant value. That is, in glass materials of equal thickness in the normal direction, the upper and lower surfaces are parts of a spherical surface sharing a single center (207 in Fig. 3). The glass material having the above-described approximately round shape has a shape that is center symmetric at the geometric center thereof. As described in WO 2007/058353A1, which is expressly incorporated herein by reference in its entirety, when the glass material approximates a viscoelastic material, the thickness of the glass in the normal direction before and after heat softening in the hot sag forming method essentially does not change. Thus, the use of a glass material that is of equal thickness in the normal direction is advantageous in that it facilitates control of the shape during heat softening.

In order to approximate a glass material to a viscoelastic material as described above, it is desirable for the outer diameter of the glass material to be adequately large relative to the thickness in the normal direction of the glass material, and for the outer diameter of the glass material to be adequately large relative to the amount of distortion in a direction perpendicular to the glass. Specifically, for the glass material employed in the present invention, it is desirable for the thickness in the normal direction to be 2 to 10 mm, preferably 5 to 7 mm. Further, the outer diameter of the glass material is desirably 60 to 90 mm, preferably 65 to 86 mm. The "outer diameter" of the glass material is the distance between any point on the lower surface edge rim portion of the glass material and the opposite point on the edge rim.

The glass material is not specifically limited. Glasses such as crown-based, flint-based, barium-based, phosphate-based, fluorine-containing, and fluorophosphate-based glasses are suitable. In a first example, suitable glass is glass comprising $SiO_2$ $B_2O_3$, and $Al_2O_3$ as the structural components and having the glass material composition of, given as molar percentages, 45 to 85 percent $SiO_2$, 4 to 32 percent $Al_2O_3$, 8 to 30 percent $Na_2O + Li_2O$ (with $Li_2O$ constituting equal to or less than 70 percent of $Na_2O + Li_2O$), the total quantity of ZnO and/or $F_2$ being 2 to 13 percent (where $F_2 < 8$ percent), $Li_2O + Na_2O/Al_2O_3$ being 2/3 to 4/1, and $SiO_2 + Al_2O_3 + Na_2O + Li_2O + ZnO + F_2 > 90$ percent.

In a second example, suitable glass are glass having the glass material composition of, given as molar percentages, 50 to 76 percent $SiO_2$, 4.8 to 14.9 percent $Al_2O_3$, 13.8 to 27.3 percent $Na_2O + Li_2O$ (where $Li_2O$ is less than or equal to 70 percent of $Na_2O + Li_2O$), the total quantity of ZnO and/or $F_2$ being 3 to 11 percent (where $F_2 < 8$ percent), $Li_2O + Na_2O/Al_2O_3$ being 2/3 to 4/1, and $SiO_2 + Al_2O_3 + Li_2O + Na_2O + Li_2O + ZnO + F_2 > 90$ percent.

In a third example, a further suitable glass composition is: $SiO_2$ (63.6 percent), $Al_2O_3$ (12.8 percent), $Na_2O$ (10.5 percent), $B_2O_3$ (1.5 percent), ZnO (6.3 percent), $Li_2O$ (4.8 percent), $As_2O_3$ (0.3 percent), $Sb_2O_3$ (0.2 percent). Other metal oxides, such as MgO, PbO, CdO, $B_2O_3$, $TiO_2$ and $ZrO_2$; coloring metal oxides; and the like may be added to stabilize the glass, facilitate melting, and impart color, so long as they do not exceed 10 percent.

As further characteristics of the glass material, for example, suitable thermal properties are: a distortion point of 460 to 480°C, an annealing point of 490 to 621°C, a softening point of 610 to 770°C, a glass transition temperature (Tg) of 510 to 665°C, a yield point (Ts) of 535 to 575°C, a specific gravity of 2.47 to 3.65 (g/cm$^3$), a refractive index, Nd, of 1.52300 to 1.8061, a thermal diffusion rate of 0.3 to 0.4 cm$^2$ * min, a Poisson ratio of 0.17 to 0.26, a photoelasticity constant of 2.82 x 10E-12, a Young's modulus of 6,420 to 9,000 kgf/mm$^2$, and a coefficient of linear expansion of 8 to 10 x 10E-6/°C. In addition, a glass material with a distortion point of 460°C, an annealing point of 490°C, a softening point of 650°C, a glass transition temperature (Tg) of 485°C, a yield point (Ts) of 535°C, a specific gravity of 2.47 (g/cm$^3$), a refractive index, Nd, of 1.52300, a thermal diffusion rate of 0.3576 cm$^2$ * min, a Poisson ratio of 0.214, a photoelasticity constant of 2.82 x 10E-12, a Young's modulus of 8,340 kgf/mm$^2$, and a coefficient of linear expansion of 8.5 x 10E-6/°C is particularly preferred.

[Continuous heating furnace]

The term "continuous heating furnace" means a device that has an inlet and an outlet and conducts thermal treatment by causing an item being processed to pass through the interior of a furnace with a set temperature distribution by means of a conveyor device such as a conveyor. In a continuous heating furnace, for example, multiple heaters devised by taking into account heat emission and radiation, and a control mechanism for air circulation within the furnace, can be used to control the temperature distribution within the furnace. The continuous heating furnace employed in the present invention normally contains multiple regions of differing temperature distribution. The above regions can be separated from the adjacent region by means such as shutters. However, such means is not necessary and the temperature can be controlled so as to continuously change the temperature distribution through the entire furnace. The above rotation is conducted in at least a region where the upper surface temperature of the glass material being formed is equal to or greater than the glass transition temperature of the glass. The reason for this is as set forth above. The rotation is preferably conducted in a region of Tg + 100°C to Tg + 165°C. Within this temperature range, the glass material is of low viscosity and undergoes substantial deformation. Thus, it is possible to efficiently reduce errors in deformation at various locations within the surface by rotation. The viscosity of the glass material during rotation is desirably equal to or lower than $2.00 \times 10^{+9}$ poise, preferably $4.50 \times 10^{+7}$ to $5.00 \times 10^{+8}$ poise. The rotation is desirably conducted in the region where the temperature of the upper surface of the material being formed peaks within the continuous heating furnace. This is because softening progresses the most in this region and thus the effect of rotation can be most efficiently achieved by rotation in this region.

Specifically, in the continuous heating furnace, the temperature is desirably controlled by sequentially disposing, from the forming mold introduction inlet side, a temperature rising region in which the temperature of the upper surface of the glass material being formed rises in the conveyance direction of the forming mold, a high temperature-maintaining region where the temperature of the upper surface of the glass material being formed is maintained equal to or higher than the maximum temperature in the temperature rising region, and a cooling region where the temperature of the upper surface of the glass material being formed is lower than the maximum temperature in the high temperature-maintaining region. By means of such temperature control, the series of forming steps of raising the temperature, maintaining a high temperature, and cooling an be continuously conducted within the continuous heating furnace, permitting the large quantity production of lens casting molds. Among the above regions, the region in which the glass material being formed is heated to or above the glass transition temperature is normally the high temperature-maintaining region. Accordingly, the above rotation is desirably conducted in the high temperature-maintaining region. It is also possible to conduct rotation in the temperature rising region and the cooling region. However, since there is normally little contact between the lower surface of the glass material being formed and the forming surface of the forming mold in the temperature rising region, substantial rotation of the forming mold in the temperature rising region may run the risk of shifting the position of the glass material being formed. Accordingly, it is desirable for the forming mold to be conveyed so that the position of the forming mold remains constant (by not conducting rotation) relative to the left and right of the direction of conveyance in the temperature rising region. On the other hand, it is possible to conduct rotation to increase the uniformity of cooling in the cooling step.

The above rotation can be conducted by continuous rotation in just one direction, either right or left, relative to the direction of conveyance, or by conducting rotation (positive rotation) to either the right or left relative to the direction of conveyance, followed by rotation (opposite rotation) in the other direction. For example, adopting the direction of conveyance of the forming mold as 0°, when either left rotation or right rotation is adopted as positive rotation and rotation in the other direction is adopted as opposite rotation, it is possible to conduct positive rotation at an angle of +150° to 360°, followed by opposite rotation at an angle of -150° to -360°, with positive and opposite rotation being conducted one or more times. The geometric center of the forming mold is suitable as the axis of the rotation from the perspectives of operability and maintaining symmetry. The above rotation is desirably conducted in a state where the surface on which the forming mold is installed remains horizontal. Preferably, a step in which rotation is conducted at a rotational angle of equal to or more than 180° to the right or left relative to the direction of conveyance of the forming mold, and then conducted at a rotational angle of equal to or more than 180° in the opposite direction from the above rotation, is conducted one or more times. Such a rotation operation makes it possible to more uniformly heat the glass material being formed as a whole. Since forming precision sometimes decreases when the glass is rotated at excessively high speed while soft, the rotational speed of the forming mold is desirably set to within a range at which forming precision is maintained. For example, the rotational speed is about 1 to 2 rpm.

PID controls can be employed in temperature control by each sensor and heater of the continuous heating furnace. PID controls are a control method for detecting deviation between a programmed target temperature and the actual temperature and restoring (feedback) the deviation from the target temperature to 0. PID controls are a method of obtaining an output in "Proportional", "Integral", "Differential" manner when calculating from the deviation. The general equation of PID controls is given below.

[Numeral 1]

General equation of PID controls:

$$y = K_P \left( e + K_I \int e\,dt + K_D \frac{d}{dt} e \right)$$

P term:

$$K_P \cdot e_n$$

I term:

$$\int e\,dt = \lim_{\Delta t \to 0} \left( \sum_{i=0}^{n} e_i \Delta t \right) = \Delta t \Sigma e_n$$

D term:

$$\frac{d}{dt} e = \lim_{\Delta t \to 0} \left( \frac{\Delta e}{\Delta t} \right)$$

as

$$\Delta e = e_n - e_{n-1}$$

$$\frac{1}{\Delta t} \left( e_n - e_{n-1} \right)$$

Thus:

$$y = Kp \left[ e_n + K_I \Delta t \Sigma e_n + \frac{K_D}{\Delta t} \left( e_n - e_{n-1} \right) \right]$$

In the above equations, e denotes deviation, K denotes gain (the gain with the subscript P denotes proportional gain, the gain with the subscript I denotes integral gain, and the gain with the subscript D denotes differential gain), $\Delta t$ denotes the sample time (sampling time, control frequency), and subscript n denotes the current time.
Using PID controls makes it possible to increase the precision with which the temperature is controlled within the furnace for changes in the heat quantity distribution based on the shape and quantity of inputted pieces to be processed. A nonsliding system (for example, a walking beam) can be adopted for conveyance within the electric furnace.
The continuous heating furnace need only be capable of effecting the desired temperature control, but is desirably a continuous feed-type electric furnace. For example, a continuous feed-type electric furnace can be employed in which the conveyance system is a nonsliding system, the temperature controls are PID temperature controls, the temperature measurement device is "K thermocouple 30 point made of platinum", a maximum use temperature is 800°C, the commonly employed temperature ranges from 590 to 650°C, the internal atmosphere is a dry air (free of oil and dust), the atmospheric control is in the form of an inlet air curtain, internal furnace purging, and an outlet air curtain, and the temperature control precision is $\pm 3$°C, and the cooling system is air cooling. Suction parts for suction, described further below, can be provided at 3 positions within the furnace.
In a continuous heating furnace, radiation from the heat sources within the furnace and radiating heat generated by secondary radiation from the interior of the furnace can heat the glass material to a desired temperature. The temperature of the continuous heating furnace is desirably controlled so that a temperature rising region having a temperature distribution where the temperature rises in the conveyance direction of the forming mold is contained in the present invention. In the temperature rising region, the glass material on the forming mold can be heated to a temperature at which the glass material is capable of deforming, desirably to a temperature equal to or higher than the glass transition temperature of the glass constituting the glass material. The temperature rising region can be a prescribed region beginning at the inlet of the continuous heating furnace.

As described above, within the continuous heating furnace, temperature control is desirably effected so as to comprise, from the inlet (forming mold introduction inlet) side, a temperature rising region, a high temperature-maintaining region, and a cooling region. The glass material passing through the interior of a furnace having such temperature control is heated to a temperature at which it is capable of deforming in the temperature rising region, the formation of the upper surface of the glass material is progressed in the high temperature-maintaining region. Then, the glass material is cooled in the cooling region and discharged to the exterior of the furnace. It suffices to set the length of each region, the conveying speed in each region, and the like based on the total length of the conveyance route of the furnace and the heating program.

In the high temperature-maintaining region, the temperature of the glass material is desirably maintained at a temperature greater than or equal to the glass transition temperature of the glass constituting the glass material being formed. The temperature of the glass material in the high temperature-maintaining region desirably exceeds the glass transition temperature, but is desirably lower than the glass softening temperature from the perspective of forming properties. Additionally, the glass material that has been formed in the high temperature-maintaining region is desirably gradually cooled to room temperature in the cooling region. The heating and cooling temperatures in the present invention refer to the temperature of the upper surface of the glass material unless specifically stated otherwise. The temperature of the upper surface of the glass material can be measured with a contact or non-contact-type temperature gauge, for example.

In the present invention, it is possible that a covering member is placed over the forming mold on which the glass material has been positioned and the exposed portion on the forming surface side of the forming mold upon which the glass material has been positioned is covered. Thus, the upper surface of the glass material can be prevented from contamination by foreign matter such as airborne dust and debris in the furnace as it passes through the interior of the continuous heating furnace. Details of an covering member that can be employed in the present invention are described in WO 2007/058353A1, for example.

To increase the forming rate of glass material in a continuous heating furnace and enhance production efficiency, a forming mold having through-holes running from the forming surface to the opposite surface from the forming surface can be employed to apply suction through the through-holes during forming.. A forming mold having through-holes is described in detail in WO 2007/058353A1. The temperature region in which a pronounced deformation-enhancing effect can be achieved by suction is normally the high temperature-maintaining region. Thus, suction is desirably conducted in the high temperature-maintaining region in the present invention.

Specific embodiments of the method of manufacturing a lens casting mold of the present invention will be described next. However, the present invention is not limited to the embodiments described below; suitable modification and the like are possible.

Temperature control in the continuous heating furnace is conducted in single cycles of prescribed duration. An example of temperature control in which one cycle lasts 13 hours will be described below.

Furnace temperature control can be conducted in seven steps. The first step (A) is a preheating step. The second step (B) is a rapid heating and temperature-rising step. The third step (C) is a slow heating and temperature-rising step. The fourth step (D) is a step in which a constant temperature is maintained. The fifth step (E) is a slow cooling step. The sixth step (F) is a rapid cooling step. And the seventh step (G) is a natural cooling step. Steps (A) to (C) correspond to the above-described temperature rising region, step (D) corresponds to the above-described high temperature-maintaining region, and steps (E) to (G) correspond to the above-described cooling region.

In the preheating step (A), which is the first step, a constant temperature close to room temperature is maintained for 50 minutes. This is done in order to establish a uniform temperature distribution throughout the glass material and to facilitate reproducibility of the thermal distribution of the glass material by temperature control during processing by heat-softening. The temperature that is maintained can be any temperature of about room temperature (about 20 to 30°C).

In rapid heating step (B), which is the second step, heating is conducted for about 90 minutes by increasing the temperature from room temperature (for example, 25°C) to a temperature 50°C below (also called "T1" hereinafter) the glass transition temperature (also referred to as "Tg" hereinafter) at a rate of about 4°C/min, for example. Then, in slow heating step (C), which is the third step, heating is conducted for 50 minutes by increasing the temperature from temperature T1 to a temperature about 50°C below the glass softening point (also called "T2" hereinafter) at a rate of 2°C/min, for example. In constant temperature maintenance step (D), which is the fourth step, temperature T2 is maintained for about 50 minutes.

The glass material that has been heated to temperature T2 is heated for 30 minutes in the constant temperature maintaining step. Heating is then conducted for another 30 minutes at temperature T2. When a forming mold having through-holes as described above is employed, during these latter 30 minutes, suction processing can be conducted through the through-holes in the forming mold. The suction processing can be conducted by operating a suction pump positioned outside the electric furnace. The negative pressure is generated by the suction with a suction pump, applying suction to the glass material positioned in the forming mold through the through-holes of the forming mold. The generation of a suction of 80 to 150 mmHg ($\fallingdotseq$ 1.0 x 10$^4$ to 1.6 x 10$^4$ Pa) through a suction inlet of the prescribed heat-resistant base mold begins 30 minutes after the start of heating at temperature T2 in the electric furnace.

Once the suction has been completed, heat-softening deformation of the glass material onto the forming mold is concluded. Once deformation by heat- softening has been concluded, cooling is conducted. In slow cooling step (E), the fifth step, cooling is conducted, for example, for about 250 minutes at a rate of 1.5°C/min to a temperature 100°C below Tg (also called "T3" hereinafter) to fix the change in shape caused by deformation. The slow cooling step also comprises annealing elements to remove glass distortion.

Next, in rapid cooling step (F), the sixth step, cooling is conducted to about 200°C at a rate of about 2.0°C/min. There is a risk of the glass that has been processed by softening and the forming mold being damaged by their own thermal contraction and differences between each other in coefficients of thermal expansion to temperature change. Accordingly, the temperature change rate is preferably small to the extent that damage does not occur.

Further, when the temperature drops to equal to or lower than 200°C, natural cooling step (G), the seventh step, is conducted. In natural cooling step (G), natural cooling is conducted from 200°C to room temperature.

Once softening processing has been completed, the lower surface of the glass material and the forming surface of the mold fit precisely together. The upper surface of the glass material deforms based on the shape deformation of the lower surface of the glass material, forming the desired optical surface. Once the glass optical surface has been formed in the above steps, the glass material is removed from the forming mold, yielding a formed article. The formed article thus obtained can be employed as a casting mold for eyeglass lenses, desirably for monofocal lenses, and preferably, for monofocal aspherical lenses. Alternatively, a portion such as the rim portion can be removed and then the formed article can be employed as a lens casting mold.

EXAMPLES

The present invention will be described below based on Examples. However, the present invention is not limited to the embodiments shown in Examples.

[Reference examples, comparative reference examples]

1. Temperature control of the continuous heating furnace

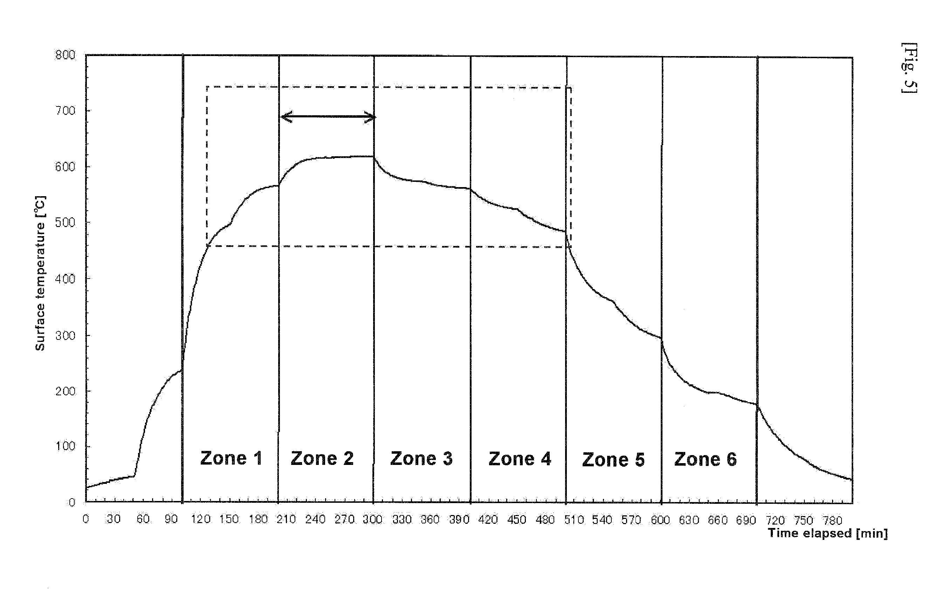

As shown in Fig. 4, a continuous heating furnace in which the interior of the furnace was divided into six zones by five wall surfaces was employed in hot forming. The continuous heating furnace was configured so that the forming mold moved from left to right in Fig. 4. Each zone was configured to hold two forming units. The arrangement was one in which the first unit to enter a zone was the first to move to the next zone. Accordingly, each forming unit was managed so as to reach a set temperature in a single chamber disposed for a prescribed period within a single zone. In the course of a single forming mold moving through the interior of the furnace over 13 hours, the temperature within the continuous heating furnace was controlled so that the temperature of the upper surface of the glass material underwent the temperature history indicated in Fig. 5. In Fig. 5, the portion indicated by the dotted-line box shows the region equal to or greater than the glass transition temperature Tg (485°C). Within the region equal to or greater than the glass transition temperature, particularly in zone 2, which was the high temperature region, heat softening progressed the most.

2. Determining the temperature distribution in the high temperature region

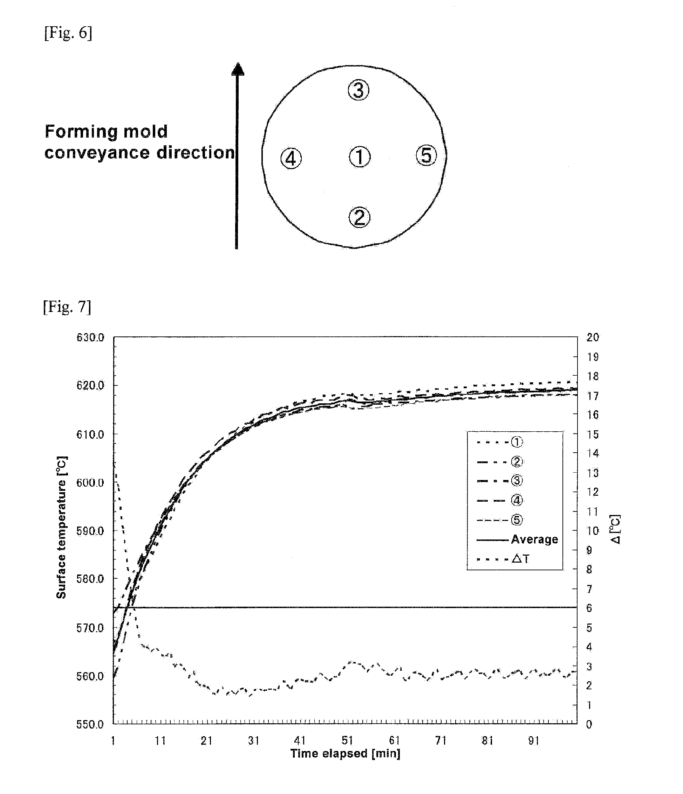

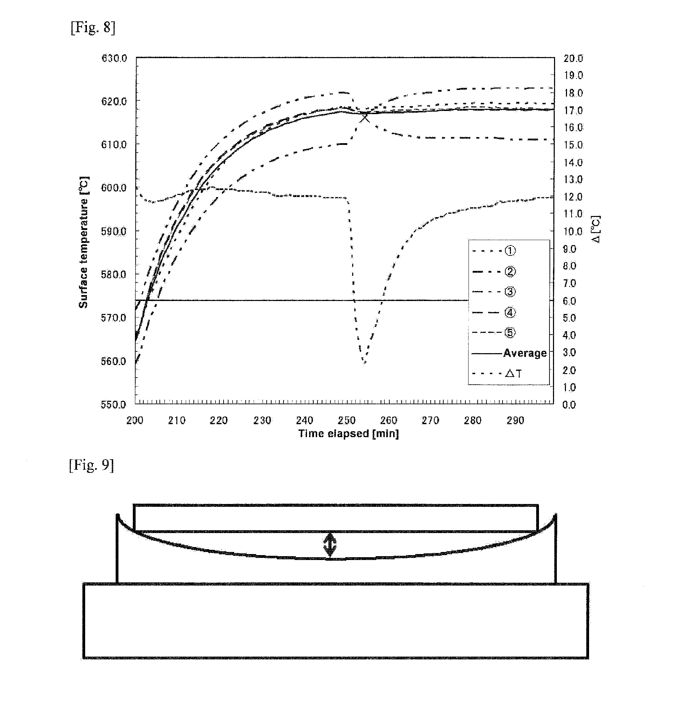

A forming mold having a forming surface (a rotationally symmetric aspherical surface in which the center was the most concave) for monofocal aspherical lenses was introduced into the above continuous heating furnace, conveyed through the interior of the furnace, and discharged. Here, the surface temperature was measured at point 5 shown in Fig. 6 on the forming surface of the forming mold in zone 2. Fig. 8 gives the measurement results when the forming mold was repeatedly rotated 180° to the right about its geometric axis and then opposite rotated 180° to the left (Reference Example) in zone 2. Fig. 8 gives the measurement results when no rotation was conducted (Comparative Reference Example).

In Figs. 7 and 8, the x-axis denotes the time elapsed from immediately after entry into zone 2 to discharge therefrom. The left primary y-axis denotes surface temperature, with the line indicating the surface temperature corresponding to the y-axis. The right secondary y-axis denotes the maximum difference in the surface temperature, with the line indicating Δ (the difference between the maximum value and the minimum value measured) corresponding to the y-axis. In Figs. 7 and 8, the line parallel to the x-axis indicates the permissible value of Δ set to 6°C. In the case of the glass material employed in Examples, when a temperature differential of equal to or greater than 6°C was produced, the softening characteristics during heat softening changed, making it more difficult to obtain a formed article of desired shape. As shown in Fig. 7, the fact that the temperature distribution at various positions on the surface was rendered uniform by rotation was determined. By contrast, when rotation was not conducted as shown in Fig. 8, it was found that the temperature distribution was equal to or more than 10°C in nearly all areas immediately following entry into zone 2.

With such a temperature distribution, variation occurred during softening and the risk of an asymmetrically formed article was present. The reason there was little temperature difference at the midpoint was thought to be as follows. The temperature setting in the continuous furnace was highest in zone 2, with the temperature in zones 1 and 3 being lower than in zone 2. That is, the highest temperature was at the center of zone 2. Two stages were provided on the zone 1 and zone 3 sides in zone 2. The midpoint where the temperature dropped temporarily was accompanied by stage displacement. That is, when in the stage on the zone 1 side, the temperature to the front (the position of circle 3) became high, and when in the stage on the zone 3 side, the temperature to the rear (the position of circle 2) became high. The time at which the temperature difference dropped temporarily was thought to coincide with subtraction of the temperature change.

[Example 1]

Forming of glass material

A flat disk-shaped glass material (83 mm in diameter, 6 mm in thickness) was positioned so as to be in a state as shown in Fig. 9 on a forming mold identical to that employed in the reference examples. The maximum curvature amount with the forming mold in the center (the arrows in Fig. 9) was 4.18 mm. The forming mold was introduced into the above-described continuous heating furnace and displaced according to the above 13-hour schedule, yielding a formed article of the glass material. In zone 2, rotation and opposite rotation at a 180° angle of rotation to the right and left about an axis in the form of the geometric center of the forming mold were repeatedly conducted (at a rotational speed of 1 to 2 rpm). A suction pressure of -13.3 kPa was applied through a though-hole in the forming mold in zone 2.

[Comparative Example 1]

With the exception that no rotation was conducted, a glass material was formed by the same method as in Example 1 and a formed article was obtained.

Evaluation results

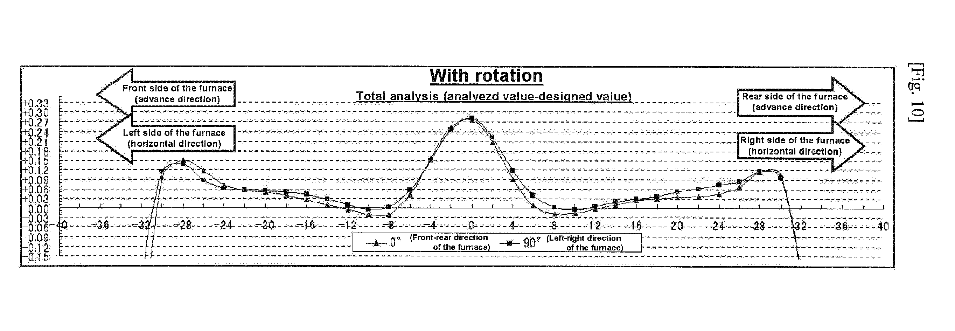

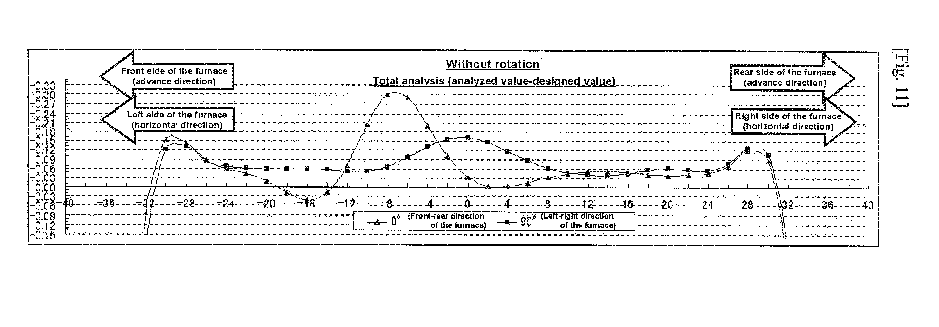

The shape errors (measured value - designed value) of the upper surface shape of the formed articles formed in Example 1 and Comparative Example 1 relative to the designed values were measured with a Talysurf. Fig. 10 shows the values measured for the formed article obtained in Example 1, and Fig. 11 shows the values measured for the formed article obtained in Comparative Example 1.

As shown in Fig. 10, in Example 1, in which rotation was conducted in zone 2, the absolute value of the amount of error was kept low, and symmetry was maintained in the error distribution. This was attributed to the fact that since a large distribution in surface temperature was not produced in the glass material while in an advanced state of heat softening, homogenous heat softening could be achieved. With a mold having such good symmetry, even though there are certain errors relative to the designed values, it can be readily corrected to obtain a surface shape in conformity with designed values. Using this formed article as a casting mold to manufacture lenses by casting polymerization would then permit the manufacturing of lenses in accordance with designed values.

By contrast, in Comparative Example 1, in which no rotation was conducted in zone 2, the amount of change was displaced toward the front of the furnace, with little change to the rear of the furnace. The proportion of change also differed with respect to the right and left of the furnace and the direction of advance. The surface was found not to have undergone uniform change. This was attributed to displacement of the temperature distribution in the region where the greatest distortion occurred due to heat softening, with the region that reached the high temperature first undergoing the greatest deformation.

The present invention permits the manufacturing of monofocal aspherical lenses with high productivity.

BRIEF DESCRIPTION OF DRAWINGS

[Fig. 1] Fig. 1 is a schematic drawing of the cross section of a center symmetric aspherical lens.
[Fig. 2] Fig. 2 is a descriptive drawing of the hot sag forming method.
[Fig. 3] Fig. 3 shows an example (sectional view) of glass that is essentially equal in thickness in the normal direction.
[Fig. 4] Fig. 4 is a schematic diagram of the continuous heating furnace employed in Examples.
[Fig. 5] Fig. 5 is a descriptive drawing of the heating schedule in Examples.
[Fig. 6] Fig. 6 shows the temperature measurement positions in a reference example and a comparative reference example.

[Fig. 7] Fig. 7 is a graph showing measurement results in the reference example.

[Fig. 8] Fig. 8 is a graph showing measurement results in the comparative reference example.

[Fig. 9] Fig. 9 is a descriptive drawing showing how the glass material was positioned in Example 1 and Comparative Example 1.

[Fig. 10] Fig. 10 is a graph showing shape errors relative to designed values on the upper surface of the formed article obtained in Example 1.

[Fig. 11] Fig. 11 is a graph showing shape errors relative to designed values on the upper surface of the formed article obtained in Comparative Example 1.

**Claims**

1. A method of manufacturing a lens casting mold by introducing a forming mold, with a forming surface on which a glass material being formed is positioned, into a continuous heating furnace and conducting thermal treatment while conveying the forming mold in the furnace to form an upper surface of the glass material being formed into a shape of a molding surface for forming a lens optical surface, comprising:

   rotating the forming mold to a right and/or to a left relative to a direction of conveyance of the forming mold in a region within the continuous heating furnace where a temperature of the upper surface of the glass material being formed is equal to or greater than a glass transition temperature of the glass.

2. The method of manufacturing according to claim 1, wherein a casting mold for a lens having rotational symmetry is manufactured.

3. The method of manufacturing according to claim 1 or 2, wherein a casting mold for a monofocal aspherical lens is manufactured.

4. The method of manufacturing according to any of claims 1 to 3, wherein a temperature of the continuous heating furnace is controlled so as to sequentially dispose, from a forming mold introduction inlet side, a temperature rising region in which a temperature of the upper surface of the glass material being formed rises in the direction of conveyance of the forming mold, a high temperature-maintaining region where the temperature of the upper surface of the glass material being formed is maintained equal to or higher than a maximum temperature in the temperature rising region, and a cooling region where the temperature of the upper surface of the glass material being formed is lower than a maximum temperature in the high temperature-maintaining region, with the rotating being conducted in the high temperature-maintaining region.

5. The method of manufacturing according to any of claims 1 to 4, wherein the rotating comprises rotation to the right or left at a rotational angle of equal to or more than 180° relative to the direction of conveyance of the forming mold, and subsequent rotation at a rotational angle of equal to or more than 180° in a direction opposite to the rotation.

[Fig. 1]

[Fig. 2]

Upper surface

Glass material

Forming mold

Lower surface

(a) Before heating

(b) After heating

[Fig. 3]

[Fig. 4]

[Fig. 5]

[Fig. 6]

[Fig. 7]

[Fig. 8]

[Fig. 9]

[Fig. 10]

[Fig. 11]

| **INTERNATIONAL SEARCH REPORT** | International application No. |
|---|---|
| | PCT/JP2009/002361 |

**A. CLASSIFICATION OF SUBJECT MATTER**
*C03B23/025(2006.01)i, G02B3/00(2006.01)i, G02C7/00(2006.01)i*

According to International Patent Classification (IPC) or to both national classification and IPC

**B. FIELDS SEARCHED**

Minimum documentation searched (classification system followed by classification symbols)
C03B23/025, G02B3/00, G02C7/00

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2007/063734 A1 (Hoya Corp.),<br>07 June, 2007 (07.06.07),<br>Claim 1; Par. No. [0036]; Fig. 1<br>& US 2009/0108477 A & EP 1961707 A1 | 1-5 |
| A | JP 2005-350286 A (Nippon Sheet Glass Co., Ltd.),<br>22 December, 2005 (22.12.05),<br>Claim 1; Fig. 1<br>(Family: none) | 1-5 |
| A | JP 07-300328 A (Tamglass Engineering Oy),<br>14 November, 1995 (14.11.95),<br>Claims 1, 22; Figs. 1 to 3<br>& US 5437704 A & EP 592862 A1 | 1-5 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06 July, 2009 (06.07.09) | 14 July, 2009 (14.07.09) |

| Name and mailing address of the ISA/<br>Japanese Patent Office | Authorized officer |
|---|---|
| Facsimile No. | Telephone No. |

Form PCT/ISA/210 (second sheet) (April 2007)

19

**EP 2 298 706 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008142864 A
- JP 6130333 A
- JP 4275930 A
- JP 2001356304 A
- JP 2002031785 A
- WO 2007058353 A1